# EUROPÄISCHE PATENTSCHRIFT

(11) **EP 1 032 522 B1**
(45) Veröffentlichungstag und Bekanntmachung des Hinweises auf die Patenterteilung: **16.10.2002**
(21) Anmeldenummer: 98962213.9
(22) Anmeldetag: 06.11.1998
(51) Int. Cl.: B62D 5/04, H02K 7/116, H02K 7/08

(54) **ELEKTROMOTORISCHER STELLANTRIEB FÜR EINE FAHRZEUGLENKANLAGE**
ELECTROMOTIVE ACTUATOR FOR A MOTOR VEHICLE STEERING SYSTEM
MECANISME DE COMMANDE A MOTEUR ELECTRIQUE POUR SYSTEME DE DIRECTION DE VEHICULE

(30) Priorität: 25.11.1997 DE 19752075
(43) Veröffentlichungstag der Anmeldung: 06.09.2000
(73) Patentinhaber: ADAM OPEL AG, 65423 Rüsselsheim (DE)
(72) Erfinder: STOFF, Wolfgang, D-65205 Wiesbaden (DE); SCHLEIDT, Werner, D-65468 Trebur (DE)
(74) Vertreter: Kümpfel, Heinz, Dipl.-Ing.
(86) Internationale Anmeldenummer: DE9803235
(87) Internationale Veröffentlichungsnummer: WO99026831

(56) Entgegenhaltungen:
- EP-A- 0 666 210
- DE-A- 19 822 478
- DE-C- 19 603 270

## Beschreibung

Die Erfindung bezieht sich auf einen elektromotorischen Stellantrieb für eine Fahrzeuglenkanlage mit einem Schneckenradgetriebe, bestehend aus einer in einem Gehäuse gelagerten Schnecke und einem mit dem Lenkgestänge vorzugsweise der Lenksäule verbundenen Schneckenrad sowie einem Drehmomentsensor zur Erfassung des vom Fahrer aufgebrachten Lenkmoments und einer elektronischen Regeleinheit, die den Motor nach Auswertung der Drehmomentsensorsignale ansteuert.

Ein solcher Stellantrieb ist in der EP-A-0 535 422, entsprechend dem Oberbegriff des Anspruchs 1, beschrieben. Der mechanische Aufbau sowie die elektronische Steuerung muß den folgenden Anforderungen genügen:
In bestimmten Fahr- und Lenksituationen ist keine Lenkkraftunterstützung notwendig, so z. B. bei leichten Spurkorrekturen bei Fahrten auf der Autobahn. In diesen Situationen soll der an die Lenkung angekoppelte elektromotorische Stellantrieb keine negativen Einflüsse auf das Lenkgefühl haben. Insbesondere soll vermieden werden, daß durch den Stellantrieb zusätzliche vom Fahrer zu überwindende Reibungskräfte erzeugt werden.
Die Regelung soll relativ weich erfolgen, was impliziert, daß die Kopplung des Stellantriebs mit dem Lenkgestänge nicht zu direkt sein soll.
Der Stellantrieb soll möglichst geräuscharm arbeiten, insbesondere sollen Klappergeräusche des Aggregats unterbunden werden, die durch von außen auf die Räder einwirkende Stoßkräfte hervorgerufen werden.

Um den verschiedenen Forderungen zu genügen, wird daher vorgeschlagen, einen elektromotorischen Stellantrieb nach den Kennzeichnenden Merkmalen des Anspruchs 1 auszuführen.

Aus der DE-C-19603270 ist bereits ein Antrieb bekannt, bei dem die Schnecke axial verschiebbar gelagert und beidseitig gegen elastische Elemente axial abgestütat ist.

Aus der DE-C-35 26 498 ist zwar bekannt, Antrieb und Lenkstange elastisch miteinander zu koppeln. Dazu ist das letzte Zahnrad des Getriebes koaxial zur Lenkwelle angeordnet, wobei die Lenkwelle mit vier seitlich abstehenden Armen versehen ist, die in mit Gummielementen versehene Löcher im Zahnrad eingreifen. Abgesehen davon, daß diese Anordnung relativ kompliziert ist, ist sie nicht geeignet, das Auftreten von Reibungskräften bei geringen Lenkeinschlägen zu verhindern. Die elastischen Elemente müssen nämlich bei dieser Konstruktion eine gewisse Härte aufweisen, so daß bei jeder Drehung des Lenkrads jedes Zahnrad des Getriebes sowie der Rotor des Motors mitgedreht werden, was erhebliche, der Lenkbewegung entgegenwirkende Reibungskräfte erzeugt.

Aus der DE-A-37 35 517 ist eine Einrichtung zur Lenkung der Hinterräder bekannt, bei der die Verstellung über eine Kugelumlaufspindel bewirkt wird. Die Nuß des Getriebes ist über zwei Rollenlager im Getriebegehäuse gelagert, wobei die Außenschalen der Lager in vorgespannten Gummielementen gehalten sind, die die Aufgabe haben, unter hoher Belastung ausgeübte Stöße aufzunehmen, um damit die Kugelumlaufspindel vor Beschädigung zu bewahren. Dies setzt voraus, daß die Gummielemente relativ hoch vorgespannt sind, um die hohen Belastungen aufnehmen zu können. Außerdem soll mit der Vorspannung erreicht werden, daß das Spiel aus dem Kugelumlaufmechanismus herausgenommen wird.

Demgegenüber sollen die Rückstellkräfte der elastisch nachgiebigen Elemente gemäß der Erfindung wie folgt eingestellt werden: Ihr Widerstand soll kleiner sein als die inneren Widerstände der Lenkanlage, so daß beim Betätigen des Motors zunächst das Spiel zwischen Schnecke und Schneckenrad überwunden wird, anschließend die Schnecke verschoben wird, wobei sie sich unter Zusammendrückung eines der elastischen Elemente an den Zähnen des Schneckenrades abstützt, und erst wenn der Widerstand so groß wird, daß die inneren Kräfte der Lenkanlage überwunden werden können, eine tatsächliche Kraftunterstützung erfolgt. Mit dieser Maßnahme wird erreicht, daß die Lenkanlage verzögert auf das Einschalten des Motors anspricht, wodurch der Regelprozeß positiv beeinflußt wird.

Mit dieser Einstellung wird weiterhin erreicht, daß bei kleinen Lenkeinschlägen, bei denen die Motorunterstützung noch nicht ausgelöst wird, das Schneckenrad die Schnecke lediglich mitnimmt, nicht aber dreht, so daß der Losbrechwiderstand des Elektromotors nicht überwunden werden braucht. Die Lenkung spricht daher in kleinen Winkelbereichen reibungsfrei an, da der Rotor des Motors nicht mitgedreht wird.

Häufig ist die Schnecke unmittelbar mit der Antriebswelle des Motors gekoppelt, wenn nicht sogar einstückig mit diesem ausgeführt. In diesem Fall muß der Kombination aus Antriebswelle und Schneckenschaft eine ausreichende axiale Bewegung zugemessen werden. Wenn dies nicht möglich ist, wird vorgeschlagen, den Schaft der Schnecke in axialer Richtung verschiebbar auf der Antriebswelle des Motors zu lagern.

Die Lagerung der Schnecke erfolgt mit mindestens einem Kugel- oder Wälzlager mit einer Innen- und einer Außenschale. Zum Anordnen des elastischen Elements wird am Schaft der Schnecke mindestens ein Bund vorgesehen und das Element zwischen der Innenschale und dem Bund angeordnet. Da die Anordnung rotationssymmetrisch ist, bietet es sich an, als elastisches Element einen Gummiring einzusetzen. Um die Wirkung sowohl beim Links- als auch beim Rechtslenken zu erreichen, ist die Schnecke beidseitig gelagert und mit jeweils einem Bund und einer elastischen Abstützung versehen.

Im folgenden soll anhand eines Ausführungsbeispiels die Erfindung näher erläutert werden. Dabei zeigen:
- Fig. 1:: eine schematische Darstellung einer Fahrzeuglenkanlage und
- Fig. 2:: einen Stellantrieb im Teilschnitt.

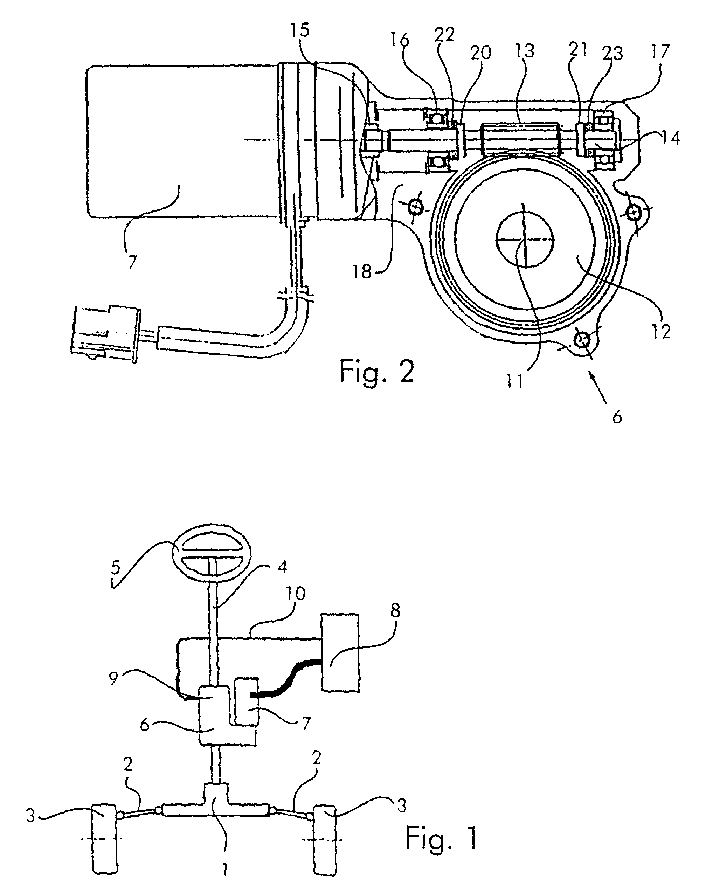

Zunächst wird auf die Fig. 1 Bezug genommen. An einem Lenkgetriebe 1 sind über zwei Lenkstangen 2 die beiden Vorderräder 3 eines Fahrzeuges angelenkt. Das Lenkgetriebe 1 ist über eine Lenkwelle 4 mit dem Lenkrad 5 des Fahrzeuges verbunden. Ein Drehen des Lenkrades nach links oder rechts führt entsprechend der Übersetzung im Lenkgetriebe 1 zu einem proportionalen Einschlag der Vorderräder 3. Um den Fahrer beim Aufbringen der Lenkkräfte zu unterstützen, ist die Lenkwelle 4 über ein Getriebe 6 mit einem Elektromotor 7 verbunden, der über eine elektronische Steuereinheit 8 betätigt wird. Die Motorkräfte werden dabei wie folgt geregelt: Das aufgebrachte Lenkmoment wird mit einem Drehmomentsensor 9 erfaßt, dessen Signale über eine Signalleitung 10 der Elektronik 8 zugeführt werden, die aufgrund eines vorgegebenen Algorithmus den Elektromotor 7 ansteuert. Als Getriebe haben sich Schneckenradgetriebe bewährt, die in dieser Form auch zu anderen Stellaufgaben im Fahrzeug herangezogen werden.

Eine solche Antriebseinheit, bestehend aus dem Elektromotor 7 und dem Schneckenradgetriebe 6, ist in der Fig. 2 dargestellt. Die Achse 11 des Schneckenrades 12 wird vom einem Teilabschnitt der Lenkwelle 4 gebildet, so daß das Schneckenrad 12 unmittelbar und direkt mit der Lenkwelle 4 gekoppelt ist.

Die Schnecke 13 ist aus einem Schaft 14 herausgearbeitet, der koaxial zur Antriebswelle 15 des Elektromotors 7 angeordnet ist. Die Verbindung zwischen dem Schaft 14 und der Antriebswelle 15 ist drehfest, läßt aber eine Axialbewegung des Schafts gegenüber der Welle zu.

Der Schaft 14 ist in zwei Kugellagern 16, 17 zu beiden Seiten der Schnecke 13 gelagert. Die Lager 16, 17 sind im Getriebegehäuse 18 angeordnet, wobei die Außenschale des einen Lagers 17 an einer inneren Stirnwand des Gehäuses 18 und wobei die Außenschale des anderen Lagers 16 an einem im Gehäuse eingelassenen Gummiring jeweils mit der von der Schnecke 13 abgewandten Seite abgestützt ist.

Der Schaft 14 ist mit radial vorstehenden Absätzen 20, 21 versehen, die im Einbauzustand jeweils zwischen der Schnecke 13 und dem zugehörigen Lager 16, 17 angeordnet sind. Zwischen den Absätzen 20, 21 und den jeweils inneren Schalen der Lager 16, 17 sind Gummiringe 22, 23 angeordnet, die unter einer leichten Vorspannung jeweils zwischen der inneren Schale eines Lagers 16 (bzw. 17) und dem zugehörigen Absatz 20 (bzw. 21) eingespannt sind. Die Schnecke 13 und der Zahnkranz des Schneckenrades 12 greifen mit einem gewissen Spiel ineinander ein.

Die funktionale Bedeutung der Gummiringe 22, 23 ergibt sich aus der Beschreibung der folgenden Situationen:
Bei leichten Lenkeinschlägen, die mit geringen Lenkmomenten verbunden sind, z. B. bei leichten Lenkkorrekturen bei Fahrten auf der Autobahn, spricht die Motorsteuerung noch nicht an, da dabei keine Unterstützung notwendig ist. In diesem Fall wird wegen der leichten Selbsthemmung des Getriebes das Schneckenrad 12 den Schaft 14 je nach Lenkeinschlag nach links oder rechts verschieben, wobei der jeweilige Gummiring 22, 23 zusammengedrückt wird. Dies erzeugt eine definierte Rückstellkraft, hat aber insbesondere die Bedeutung, daß bei diesen leichten Lenkeinschlägen der Motor noch nicht mitgedreht wird, so daß das Losbrechmoment des Motors nicht überwunden werden muß. Der Fahrer erhält somit in diesen Situationen ein klares Lenkgefühl.
Auf der anderen Seite bewirken die Gummiringe 22, 23, daß bei eingeschaltetem Elektromotor 7, also bei Aufbringung einer Unterstützungskraft, diese nur verzögert auf die Lenkwelle 4 gebracht wird, da zunächst der Schaft unter Zusammendrückung des jeweiligen Gummirings 22, 23 in axialer Richtung verschoben wird. Dieses etwas verspätete Ansprechen hat einen positiven Einfluß auf den Regelkreis. Ein zu direktes Ansprechen könnte zu Übersteuerungen führen.
Schließlich haben die Gummiringe 22, 23 die Aufgabe, Stöße, die über die Räder in die Lenkanlage eingeleitet werden, zu dämpfen. Diese Stöße mit hochfrequenter Anregung lassen im Getriebe insbesondere dann, wenn ein Spiel zwischen Schneckenrad 12 und der Schnecke 13, wie in diesem Fall bewußt vorgesehen, vorhanden ist, Geräusche entstehen, die als Körperschall übertragen und abgestrahlt werden. Mit den Gummiringen 22, 23 kann dies wirkungsvoll unterbunden werden.
Das in diesem Ausführungsbeispiel vorgesehene Spiel des Getriebes zwischen Schnecke und Schneckenrad beträgt etwa 0,5° Drehung der Motorantriebswelle, die von den Gummielementen 22, 23 aufzunehmende Verschiebung des Schaftes 14 entspricht etwa einer Drehung der Motorantriebswelle von 2° bis 3°. Wenn man diese Toleranz allein durch das mechanische Spiel zwischen Schnecke und Lenkrad darstellen soll, würde dies zu erheblichen Geräuschen bei einer äußeren Anregung führen.
Die dargelegten Wirkungen lassen sich auch dann erreichen, wenn die Gummielemente 22, 23 z. B. jeweils zwischen einer Stirnwand des äußeren Lagerrings und dem Gehäuse angeordnet wären. Denkbar wäre auch eine elastische Abstützung der Stirnfläche des Schaftes 14 am Boden des Gehäuses und der Antriebswelle 15 am Boden des Motorgehäuses, wobei dann natürlich eine Einteiligkeit von Antriebswelle 15 und Schaft gegeben sein muß. Eine mögliche Ausführungsform dazu ist in der EP-A-0 655 358 dargestellt.

## Patentansprüche

1. Elektromotorischer Stellantrieb für eine Fahrzeuglenkanlage mit einem Schneckenradgetriebe (6), bestehend aus einer in einem Gehäuse (18) gelagerten Schnecke (13) und einem mit der Lenkwelle (4) gekoppelten Schneckenrad (12) sowie mit einem Drehmomentsensor (9) zur Erfassung des vom Fahrer aufgebrachten Lenkmoments und einer Steuereinheit (8), die den Motor (7) in Abhängigkeit vom aufgebrachten Lenkmoment ansteuert, **dadurch gekennzeichnet, daß** ein Spiel zwischen dem Schneckenrad (12) und der Schnecke vorgesehen, daß die Schnecke (13) in axialer Richtung verschiebbar gelagert, daß die Schnecke (13) in axialer Richtung über elastisch nachgiebige Elemente (22, 23) am Getriebegehäuse (18) abgestützt ist und daß die Rückstellkräfte der elastisch nachgiebigen Elemente (22, 23) so eingestellt sind, daß ihre Rückstellkräfte kleiner sind als die inneren Kräfte der Lenkanlage, so daß beim Betätigen des Motors (7) die Schnecke (13) axial unter Zusammendrückung eines der elastisch nachgiebigen Elemente (22, 23) verschoben wird.

2. Stellantrieb nach Anspruch 1, **dadurch gekennzeichnet, daß** die Schnecke (13) auf einem Schaft (14) ausgebildet ist, der in oder an der Antriebswelle (15) des Motors (7) in axialer Richtung verschiebbar gelagert ist.

3. Stellantrieb nach einem der vorhergehenden Ansprüche, **dadurch gekennzeichnet, daß** die Lagerung des Schaftes (14) im Getriebegehäuse (18) mittels mindestens eines Kugel- oder Wälzlagers (16, 17) mit einer Innen- und einer Außenschale erfolgt.

4. Stellantrieb nach Anspruch 3, **dadurch gekennzeichnet, daß** der Schaft (14) mindestens einen radial vorstehenden Absatz (20, 21) aufweist, wobei zwischen der Innenschale des Kugel- oder Wälzlagers (16, 17) und dem Absatz eines der elastisch nachgiebigen Elemente (22, 23) eingesetzt ist.

5. Stellantrieb nach Anspruch 4, **dadurch gekennzeichnet, daß** das elastisch nachgiebige Element aus einem Gummiring (22, 23) besteht, der zwischen der Innenschale und dem vorspringenden Absatz (20, 21) eingespannt ist.

6. Stellantrieb nach einem der Ansprüche 3 bis 5, **dadurch gekennzeichnet, daß** der Schaft (14) der Schnecke (13) zu beiden Seiten der Schnecke (13) gelagert ist, und daß der Schaft (14) an den Innenschalen beider Lager (16, 17) über ein elastisch nachgiebiges Element (22, 23) abgestützt ist.

## Claims

1. Electric motor actuating drive for a vehicle steering system with a worm gear mechanism (6), consisting of a worm (13) mounted in a housing (18) and a worm gear (12) coupled to the steering shaft (4) as well as with a torque sensor (9) for detection of the steering torque applied by the driver and a control unit (8) which controls the motor (7) as a function of the applied steering torque, **characterised in that** a clearance is provided between the worm gear (12) and the worm, **in that** the worm (13) is mounted displaceably in the axial direction, **in that** the worm (13) is supported on the gear housing (18) in the axial direction by elastically yielding elements (22, 23) and **in that** the return forces of the elastically yielding elements (22, 23) are adjusted such that their return forces are smaller than the internal forces of the steering system, so that upon actuation of the motor (7) the worm (13) is displaced axially, compressing one of the elastically yielding elements (22, 23).

2. Actuating drive according to claim 1, **characterised in that** the worm (13) is formed on a shaft (14) which is mounted displaceably in the axial direction in or on the drive shaft (15) of the motor (7).

3. Actuating drive according to any of the preceding claims, **characterised in that** mounting of the shaft (14) in the gear housing (18) is effected by means of at least one ball or rolling bearing (16, 17) with an inner and an outer shell.

4. Actuating drive according to claim 3, **characterised in that** the shaft (14) comprises at least one radially projecting shoulder (20, 21), wherein between the inner shell of the ball or rolling bearing (16, 17) and the shoulder is inserted one of the elastically yielding elements (22, 23).

5. Actuating drive according to claim 4, **characterised in that** the elastically yielding element consists of a rubber ring (22, 23) which is mounted between the inner shell and the projecting shoulder (20, 21).

6. Actuating drive according to any of claims 3 to 5, **characterised in that** the shaft (14) of the worm (13) is mounted on both sides of the worm (13), and **in that** the shaft (14) is supported on the inner shells of both bearings (16, 17) by an elastically yielding element (22, 23).

## Revendications

1. Mécanisme de commande à moteur électrique pour un système de direction d'un véhicule automobile avec une transmission à vis sans fin (6) comprenant une vis sans fin (13) montée dans un carter (18) et un pignon à vis sans fin (12) couplé à l'arbre de direction (4), ainsi qu'un capteur de couple (9) pour mesurer le moment de braquage appliqué par le conducteur et une unité de commande (8) qui commande le moteur (7) en fonction du moment de braquage appliqué, **caractérisé en ce qu'**il est prévu un jeu entre le pignon à vis sans fin (12) et la vis sans fin, **en ce que** la vis sans fin (13) est montée avec possibilité de coulissement dans la direction axiale, **en ce que** la vis sans fin (13), dans la direction axiale, est supportée par le carter (18) par l'intermédiaire d'éléments (22, 23) souples élastiques et **en ce que** la force de rappel des éléments (22, 23) souples élastiques est réglée de telle manière que celle-ci soit inférieure aux moments internes du système de direction afin que lors de l'actionnement du moteur (7), la vis sans fin (13) se déplace axialement en compressant l'un des éléments (22, 23) souples élastiques.

2. Mécanisme de commande selon la revendication 1, **caractérisé en ce que** la vis sans fin (13) est aménagée sur un arbre (14) qui est monté avec possibilité de coulissement dans la direction axiale dans ou sur l'arbre d'entraînement (15) du moteur (7).

3. Mécanisme de commande selon une des revendications précédentes, **caractérisé en ce que** le montage de l'arbre (14) dans le carter (18) est réalisé à l'aide d'au moins un roulement à billes ou d'un palier à roulement (16, 17) comportant une bague intérieure et une bague extérieure.

4. Mécanisme de commande selon la revendication 3, **caractérisé en ce que** l'arbre (14) comporte au moins un épaulement (20, 21) faisant saillie radialement, l'un des éléments (22, 23) souples élastiques étant disposé entre la bague intérieure du roulement à billes ou du palier à roulement (16, 17) et l'épaulement.

5. Mécanisme de commande selon la revendication 4, **caractérisé en ce que** l'élément (22, 23) souple élastique est formé d'une bague en caoutchouc qui est bloquée entre la bague intérieure et l'épaulement (20, 21) formant saillie.

6. Mécanisme de commande selon une des revendications 3 à 5, **caractérisé en ce que** l'arbre (14) de la vis sans fin est supporté par des paliers de part et d'autre de la vis sans fin (13) et **en ce que** l'arbre (14) prend appui sur les bagues intérieures des deux roulements (16, 17) par l'intermédiaire d'un élément (22, 23) souple élastique.
